# EUROPEAN PATENT SPECIFICATION

(11) **EP 4 356 362 B1**
(45) Date of publication and mention of the grant of the patent: **28.10.2026**
(21) Application number: 22890350.6
(22) Date of filing: 02.11.2022
(51) Int. Cl.: G01S 7/41, G01S 13/02, G01S 13/56, G06V 20/52, G08B 29/18, G08B 13/24, G06V 20/68, H04L 12/12, G06V 10/143, G06Q 30/012

(54) **METHOD AND ELECTRONIC DEVICE FOR MANAGING OBJECTS**
VERFAHREN UND ELEKTRONISCHE VORRICHTUNG ZUR VERWALTUNG VON OBJEKTEN
PROCÉDÉ ET DISPOSITIF ÉLECTRONIQUE DE GESTION D'OBJETS

(30) Priority: 02.11.2021 IN 202141050323
(43) Date of publication of application: 24.04.2024
(73) Proprietor: Samsung Electronics Co., Ltd., Suwon-si, Gyeonggi-do 16677 (KR)
(72) Inventor: TRISAL, Ankur, Bangalore 560037 (IN); TIWARI, Vijay Narayan, Bangalore 560037 (IN)
(74) Representative: Appleyard Lees IP LLP
(86) International application number: PCT/KR2022/016988
(87) International publication number: WO 2023/080619

(56) References cited:
- KR-A- 20140 119 424
- KR-A- 20200 056 634
- KR-B1- 101 916 591
- KR-B1- 102 103 260
- US-A1- 2019 333 233
- US-A1- 2020 182 684
- BARUSU MADHUSUDHANA REDDY ET AL: "Non-Invasive Vibration Measurement for Diagnosis of Bearing Faults in 3-Phase Squirrel Cage Induction Motor Using Microwave Sensor", IEEE SENSORS JOURNAL, IEEE, USA, vol. 21, no. 2, 23 June 2020 (2020-06-23), pages 1026 - 1039, XP011826672, ISSN: 1530-437X, [retrieved on 20201217], DOI: 10.1109/JSEN.2020.3004515
- ENTESARI KAMRAN ET AL: "Broadband Dielectric Spectroscopy: Recent Developments in Microwave Time-Domain Techniques", IEEE MICROWAVE MAGAZINE, IEEESERVICE CENTER, PISCATAWAY, NJ, US, vol. 22, no. 6, 4 May 2021 (2021-05-04), pages 26 - 48, XP011853190, ISSN: 1527-3342, [retrieved on 20210504], DOI: 10.1109/MMM.2021.3064100

## Description

### [Technical Field]

The disclosure relates to an electronic device, and more specifically, to methods and electronic devices for detecting object anomalies using an ultra-wide band (UWB) sensor.

### [Background Art]

Related art systems in an Internet of Things (loT) environment can monitor functional performance of loT devices, such as, but not limited to, a refrigerator, a washing machine, a microwave oven, by utilizing a variety of sensors (e.g., proximity sensors, chemical sensors, biological sensors, accelerometers, localization sensors, a camera, infrared sensors, and the like). The related art systems may identify an anomaly in the functional performance of the loT devices based on outputs from the multiple sensors. The related art systems may not capable to identify the anomaly in the functional performance and the quality of an object such as the loT devices, non-loT devices, food items, etc. using a single sensor. Moreover, each loT device might contain multiple sensors to monitor the functional performance of that specific loT device. Due to incorporating the multiple sensors, the manufacturing cost and design complexity of the related art systems may be high. Further, the related art systems in the loT environment may not capable to monitor a quality of organic items such as groceries, food items, beverages, crops, etc., and a quality of inorganic items such as chemical compounds. Therefore, a user needs to depend on other dedicated complex systems to track the quality of organic and inorganic items.

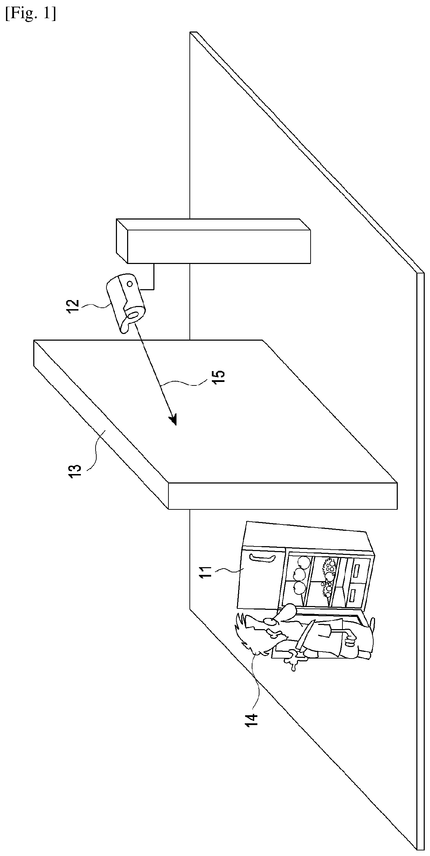

In case of monitoring the functional performance of the loT devices (e.g., refrigerator 11) using the camera 12 as shown in FIG. 1, obstructions 13 may affect a field of view 15 of the camera 12 and the camera 12 may be useful to monitor the functional performance of the loT devices. Moreover, the camera 12 may capture an image of a user 14 interacting with the loT devices (e.g., refrigerator 11), which may be a major concern on a privacy of the user 14. Thus, it is desired to address the above-mentioned shortcomings or at least provide a useful alternative.

Barusu Madhusudhana Reddy et al: "Non-Invasive Vibration Measurement for Diagnosis of Bearing Faults in 3-Phase Squirrel Cage Induction Motor Using Microwave Sensor", IEEE Sensors Journal, IEEE, USA, vol.21, no. 2, 23 June 2020, pages 1026 - 1039 proposes using a high-frequency signal from microwave sensor (handheld UWB radar) projected on the Squirrel Cage Induction Motor (SCIM) and the reflected signal captured, with the signal obtained being filtered with Software Phase Locked Loop (Low pass filter (SPLL)) and analyzed with a signal processing algorithm like Wavelet Transform to identify the faults in the motor. Entesari Kamran et al: "Broadband Dielectric Spectroscopy: Recent Developments in Microwave Time-Domain Techniques", IEEE Microwave Magazine, IEEE Service Center, Piscataway, NJ, US, vol. 22, no. 6, 4 May 2021, pages 26 - 48 covers recent efforts to integrate UWB pulse generators, sensors and detectors to realize board- and chip-level Time-Domain Microwave Broadband Dielectric Spectroscopy systems for portable applications. US 2020/182684 A1 describes systems and methods for monitoring of mechanical and electrical machines. KR 2020 0056634 A describes a UWB care service control system for elderly people using UWB radar sensor and Al. KR 101 916 591 B1 describes a bio-information determination apparatus and method using principal component analysis of radar signal.

### [Disclosure]

### [Technical Solution]

Provided is a non-contact based method for detecting an anomaly of objects, such as, but not limited to, Internet of Things (loT) devices, non-loT devices, food items, and beverages, and automatically providing recommendations to a user to potentially resolve the anomaly. According to an aspect of one or more embodiments, the method allows an electronic device to monitor the performance of the object to detect whether or not the anomaly is present at the object using a single ultra-wide band (UWB) sensor, where the object should present in a signal coverage of the UWB sensor. The single UWB sensor-based design of the electronic device may reduce a manufacturing cost, as well as, design complexity of the electronic device when compared to related anomaly detection systems. The electronic device does not track a user's identity while monitoring the performance of the object. Hence, user privacy may not be a concern in the embodiments presented herein.

According to an aspect of one or more embodiments, a quality of organic items such as, but not limited to, groceries, food items, beverages, and crops, and a quality of inorganic items such as chemical compounds in an IoT environment are monitored. In some embodiments, the UWB sensor can be integrated with the loT devices for monitoring the quality of organic and inorganic items.

According to an aspect of the disclosure, a method of managing objects by an electronic device as defined by claim 1 of the claims appended hereto is provided.

The method may further include determining, using an artificial intelligence (AI) engine, a functional state of the at least one object based on the material property parameter and the motion parameter; generating at least one recommendation based on the functional state of the at least one object; and providing the at least one recommendation to a user of the at least one object.

The extracting of the variation may include generating noise free data of the reflected UWB signal and a binary image of the noise free data by pre-processing the reflected UWB signal, and determining the variation in least one of the material property parameter and the motion parameter from the noise free data and the binary image.

The generating of the noise free data of the reflected UWB signal and the binary image of the noise free data may include generating the noise free data of the reflected UWB signal by removing a direct current (DC) noise and a carrier signal in the reflected UWB signal, filtering the noise free data by removing a low frequency time component from the noise free data, performing a background subtraction on the filtered noise free data using wavelets, and generating the binary image of the noise free data using an output obtained from the performing of the background subtraction on the filtered noise free data.

The identifying of the anomaly may include determining a performance coefficient from the generated pattern, and determining whether the performance coefficient meets a threshold value.

The method may further include detecting the anomaly of the at least one object, in response to determining that the performance coefficient meets the threshold value.

The method may further include updating the generated pattern to a database, in response to determining that the performance coefficient does not meet the threshold value.

The updating of the generated pattern to the database may include classifying, using an Al engine, a functional state of the at least one object based on the material property parameter and the motion parameter, and storing, in the database, the generated pattern and the functional state of the at least one object corresponding to the generated pattern.

The material property parameter may include a dielectric constant of the at least one object, and the motion parameter may include a polynomial phase signal (PPS) parameter of the at least one object.

The monitoring of the at least one object may include transmitting, using the UWB sensor, a reference UWB signal towards the at least one object, and receiving, using the UWB sensor, a reflected UWB signal corresponding to the transmitted reference UWB signal from the at least one object.

According to an aspect of the disclosure, an electronic device for managing objects as defined by claim 9 of the claims appended hereto is provided.

The processor may be further configured to determine, using an Al engine, a functional state of the at least one object based on the material property parameter and the motion parameter, generate at least one recommendation based on the functional state of the at least one object, and provide the at least one recommendation to a user of the at least one object.

The processor may be further configured to generate noise free data of the reflected UWB signal and a binary image of the noise free data by pre-processing the reflected UWB signal, and determine the variation in least one of the material property parameter and the motion parameter from the noise free data and the binary image.

The processor may be further configured to generate the noise free data of the reflected UWB signal by removing a DC noise and a carrier signal in the reflected UWB signal, filter the noise free data by removing a low frequency time component from the noise free data, perform a background subtraction on the filtered noise free data using wavelets, and generate the binary image of the noise free data using an output obtained from the background subtraction performed on the filtered noise free data.

The processor may be further configured to determine a performance coefficient from the generated pattern, determine whether the performance coefficient meets a threshold value, and perform at least one of detect the anomaly of the at least one object when the performance coefficient is determined to meet the threshold value, and update the generated pattern to a database when the performance coefficient is determined to not meet the threshold value.

The processor may be further configured to classify, using an Al engine, a functional state of the at least one object based on the material property parameter and the motion parameter, and store, in the database, the generated pattern and the functional state of the at least one object corresponding to the generated pattern to the database.

The material property parameter comprises a dielectric constant of the at least one object, and the motion parameter comprises a PPS parameter of the at least one object.

The processor may be further configured to transmit, using the UWB sensor, a reference UWB signal towards the at least one object, and receive, using the UWB sensor, a reflected UWB signal corresponding to the transmitted reference UWB signal from the at least one object.

According to an aspect of the disclosure, a method of managing objects by an electronic device as defined by claim 14 of the claims appended hereto is provided.

The providing of the at least one performance recommendation may include determining, using an Al engine, a functional state of the at least one object based on the material property and the movement associated with the at least one object, and generating the at least one performance recommendation based on the functional state of the at least one object.

The above and other aspects of the embodiments herein will be better appreciated and understood when considered in conjunction with the following description and the accompanying drawings. It should be understood, however, that the following descriptions, while describing embodiments and numerous specific details thereof, are given by way of illustration and not of limitation. Many changes and modifications may be made within the scope of the embodiments, and the embodiments herein include all such modifications.

### [Description of Drawings]

The above and other aspects, features, and advantages of certain embodiments of the present disclosure will be more apparent from the following description taken in conjunction with the accompanying drawings, in which:
FIG. 1 illustrates an example scenario monitoring functional performance of an Internet of Things (IoT) device using a camera, according to the related art;
FIG. 2A is a block diagram of an electronic device for determining an anomaly of an object, according to an embodiment;
FIG. 2B is a block diagram of an object monitoring engine for identifying the anomaly of the object based on a pattern, according to an embodiment;
FIG. 3 is a flow diagram illustrating a method for determining the anomaly of the object, according to an embodiment;
FIG. 4A is a flow diagram illustrating a method for generating the pattern and detecting a functional condition of the object, according to an embodiment;
FIG. 4B is a flow diagram illustrating a method for pre-processing a reflected UWB signal, according to an embodiment;
FIG. 5A is a flow diagram illustrating a method for identifying the anomaly of the object in response to generating the pattern, according to an embodiment;
FIG. 5B illustrates noise free data of the reflected UWB signal, according to an embodiment;
FIGS. 6 and 7 illustrate an example scenario of monitoring functional performance of loT devices using the electronic device, according to an embodiment;
FIGS. 8 and 9 illustrate an example scenario of monitoring a quality of apples using the electronic device, according to an embodiment; and
FIGS. 10 and 11 illustrate an example scenario of monitoring a performance of a refrigerator using the electronic device, according to an embodiment.

### [Mode for Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Accordingly, the embodiments herein provide a method for managing an object using an electronic device. The method includes monitoring, by the electronic device, the object using an ultra-wide band (UWB) sensor of the electronic device over a time period. The method includes extracting, by the electronic device, a variation in a material property parameter and/or a motion parameter of the object based on the monitored object. The method includes generating, by the electronic device, a pattern based on the variation in the material property parameter and/or the motion parameter of the object. The method includes identifying, by the electronic device, the anomaly of the object based on the generated pattern.

Accordingly, the embodiments herein provide the electronic device for managing the object. The electronic device includes an object monitoring engine, a memory, a processor, and the UWB sensor, where the object monitoring engine is coupled to the memory and the processor. The object monitoring engine is configured for monitoring the object using the UWB sensor over the time period. The object monitoring engine is configured for extracting the variation in the material property parameter and/or the motion parameter of the object based on the monitored object. The object monitoring engine is configured for generating the pattern based on the variation in the material property parameter and/or the motion parameter of the object. The object monitoring engine is configured for identifying the anomaly of the object based on the generated pattern.

Accordingly, the embodiments herein provide a method for managing the object using the electronic device. The method includes monitoring, by the electronic device, the variation in the material property and/or the movement associated with object using the UWB sensor 10of the electronic device over the time period. The method includes extracting, by the electronic device, the dielectric constant and the PPS parameters of the object indicative of an extent of the variation of the material property and/or the movement associated with the object. The method includes determining, by the electronic device, the pattern based on the extracted parameters. The method includes providing, by the electronic device, recommendations on performance of the object to the user corresponding to the determined pattern.

Unlike related art anomaly detection methods and systems, the electronic device can detect the anomaly of the object using a single UWB sensor and automatically provides recommendations to the user to resolve the anomaly, where the object should present in a signal coverage of the UWB sensor. The single UWB sensor-based design of the electronic device may reduce manufacturing cost as well as design complexity of the electronic device when compared to related anomaly detection methods and systems. Moreover, the proposed method may help the user to understand a performance/health/condition of different kinds of objects in an Internet of Things (loT) environment without high-end sensors. Thus, the proposed method may increase the monitoring capacity of the electronic device.

Unlike related art methods and systems, the electronic device does not track a user's identity while monitoring performance of the object. Hence, a privacy of the user may not be a concern of the methods and devices disclosed herein.

Unlike related methods and systems, the electronic device may monitor the quality of organic items such as, but not limited to, groceries, food items, beverages, and crops, and a quality of inorganic items such as chemical compounds in the loT environment. The UWB sensor can be integrated with any loT device for monitoring the quality of the organic and inorganic items within the signal coverage of the UWB sensor.

Unlike related art methods and systems, the electronic device may monitor user's daily activities using the UWB sensor, generate unique usage/performance pattern of the user using unique UWB signal parameters (e.g., material property parameter and motion parameter of the object) extracted from a reflected UWB signal received at the UWB sensor, and recommend actions, such as wellness recommendation alerts, to the user.

Unlike related art methods and systems, the electronic device may extract the unique UWB parameters for the object (e.g., living organism, electronic/non-electronic, plant product, people, loT devices, etc.) and estimate performance, quality, and/or wear and tear patterns. Further, the electronic device may generate the unique usage/performance pattern using the unique UWB parameters. Upon detection of abnormal behavior based on excessive activity levels, for example, and/or an anomaly associated with the object, the electronic device may provide the recommendations corresponding to the performance and/or usage of the objects to improve the performance or quality of the object.

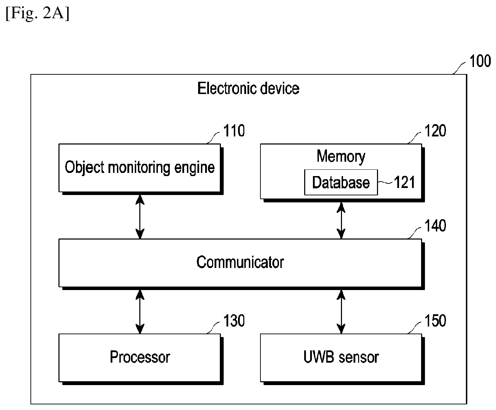

FIG. 2A is a block diagram of an electronic device 100 for determining an anomaly of an object, according to an embodiment. Examples of the object include, but are not limited to, loT devices, non-loT devices, food items, beverages, human, movable/fixed materials, etc. Examples of the electronic device 100 include, but are not limited to, a smart phone, a tablet computer, a personal digital assistant (PDA), a desktop computer, an loT device, a wearable device, etc. In an embodiment, the electronic device 100 includes an object monitoring engine 110, a memory 120, a processor 130, a communicator 140, and a UWB sensor 150. An example for the UWB sensor 150 includes, but is not limited to, a UWB radar.

The memory 120 includes a database 121, where the database 121 contains patterns generated by the object monitoring engine 110. The memory 120 stores instructions to be executed by the processor 130. The memory 120 may include non-volatile storage elements. Examples of such non-volatile storage elements may include magnetic hard discs, optical discs, floppy discs, flash memories, or forms of electrically programmable memories EPROM) or electrically erasable and programmable EEPROM) memories. In addition, the memory 120 may, in some examples, be considered a non-transitory storage medium. The term "non-transitory" may indicate that the storage medium is not embodied in a carrier wave or a propagated signal. However, the term "non-transitory" should not be interpreted that the memory 120 is non-movable. In some examples, the memory 120 can be configured to store larger amounts of information than its storage space. In certain examples, a non-transitory storage medium may store data that can, over time, change (e.g., in random access memory (RAM) or cache). The memory 120 can be an internal storage unit or it can be an external storage unit of the electronic device 100, a cloud storage, or any other type of external storage.

The processor 130 is configured to execute instructions stored in the memory 120. The processor 130 may be a general-purpose processor, such as a central processing unit (CPU), an application processor (AP), or the like, a graphics-only processing unit such as a graphics processing unit (GPU), a visual processing unit (VPU) and the like. The processor 130 may include multiple cores to execute the instructions. The communicator 140 may be configured for communicating internally between hardware components in the electronic device 100. Alternatively or additionally, the communicator 140 may be configured to facilitate communication between the electronic device 100 and other devices via one or more networks (e.g., radio technology). The communicator 140 includes an electronic circuit specific to a standard that enables wired and/or wireless communication. For example, the UWB sensor 150 may be configured to transmit a reference UWB signal and to receive a reflected UWB signal.

The object monitoring engine 110 is implemented by processing circuitry such as logic gates, integrated circuits, microprocessors, microcontrollers, memory circuits, passive electronic components, active electronic components, optical components, hardwired circuits, or the like, and may optionally be driven by a firmware. The circuits may, for example, be embodied in one or more semiconductor chips, or on substrate supports such as printed circuit boards and the like.

The object monitoring engine 110 may monitor the object using the UWB sensor 150 over a time period (e.g., 2 months, 1 hour, 10 minutes, etc.). In an embodiment, the object monitoring engine 110 transmits the reference UWB signal towards the object using the UWB sensor 150. Further, the object monitoring engine 110 receives the reflected UWB signal corresponding to the transmitted UWB signal from the object using the UWB sensor 150.

The object monitoring engine 110 extracts a variation in a material property parameter and/or a motion parameter of the object based on the monitored object. In an embodiment, the material property parameter comprises a dielectric constant, and the motion parameter comprises a polynomial phase signal (PPS) parameter. The object monitoring engine 110 uses the PPS parameter for determining motion of the object such as a puny motion and a colossal motion of the object. Examples of the puny motion include, but are not limited to, a small mechanical motion, a small vibrational motion, etc. Examples of the colossal motion include, but are not limited to, displacement of the object from one location to other location, etc. The dielectric constant may be different for each object or each material of the object. In an embodiment, the object monitoring engine 110 identifies the object based on the reflected UWB signal. Alternatively or additionally, the object monitoring engine 110 generates noise free data of the reflected UWB signal and a binary image of the noise free data by pre-processing the reflected UWB signal. Alternatively or additionally, the object monitoring engine 110 determines the variation in the material property parameter and/or the motion parameter of the object from the noise free data and the binary image.

In an embodiment, the object monitoring engine 110 determines the dielectric constant *ε* of the object based on a permeability of the material of the object, where the dielectric constant *ε* is determined using Equation 1. [Equation 1] $Dielectric constant , ε ≅ {\left[1+\frac{Δ T}{\left(\frac{d}{c}\right)}\right]}^{2}$

Referring to Eq. 1, d represents a thickness of a concrete slab, and c represents the speed of light in free space.

In an embodiment, the object monitoring engine 110 estimates the PPS parameter based on an adaptive short-time Fourier transform (ASTFT) using the noise free data. The PPS parameters may be given as input to the Al engine 116 (e.g., a classifier model). An m-th order PPS, θ(*t*), may be calculated using Equation 2. [Equation 2] $θ \left(t\right) = A \times exp \left(j{\sum }_{k} \frac{{a}_{m} {t}^{k}}{k} + {ja}_{0}\right) , t ∈ \left[-\frac{T}{2},\frac{T}{2}\right)$

Referring to Eq. 2, A and *aₘ* denote an amplitude and phase parameters of the UWB signal (e.g., noise free data), respectively, *T* is a signal duration of the UWB signal, and *j* is an imaginary unit.

In an embodiment, the object monitoring engine 110 determines a time-domain transform and a frequency domain transform of the reflected UWB signal and extracts features related to the time and frequency domains after classifying the into the material property parameter and the motion parameter of the object. The extracted features may comprise magnitude-based features (e.g., power, root mean Square (RMS) speed), frequency domain based features (e.g., maximum, minimum, RMS, turns count, zeros crossing of spectrum envelope, mean, median frequency, Shannon entropy, power ratio of different frequency bands of spectrum envelope), binary image-based features (e.g., effective range bins), multi-scale features (e.g., wavelet-based features calculated on different scales, local binary patterns histogram calculated on different scales), and/or clustering-based features (e.g., locations and magnitudes of most prominent 20 clusters).

In an embodiment, the object monitoring engine 110 generates the noise free data of the reflected UWB signal by removing a direct current (DC) noise and a carrier signal in the reflected UWB signal. Alternatively or additionally, the object monitoring engine 110 filters the noise free data by removing a low-frequency time component from the noise free data. Alternatively or additionally, the object monitoring engine 110 performs a background subtraction on the filtered data using wavelets. Alternatively or additionally, the object monitoring engine 110 generates the binary image of the noise free data using an output obtained due to the background subtraction on the filtered data.

The object monitoring engine 110 generates a pattern based on the variation in the material property parameter and/or the motion parameter of the object. The object monitoring engine 110 identifies the anomaly of the object based on the generated pattern.

In an embodiment, the object monitoring engine 110 determines a performance coefficient from the generated pattern by training a latent correlation probabilistic model. Examples of the performance coefficient include, but are not limited to a freshness coefficient, a wear and tear coefficient. Alternatively or additionally, the object monitoring engine 110 determines whether the performance coefficient meets a threshold value. In an embodiment, the object monitoring engine 110 detects the anomaly of the object, in response to determining that the performance coefficient meets the threshold value. In another embodiment, the object monitoring engine 110 updates the generated pattern to the database 121, in response to determining that the performance coefficient does not meet the threshold value.

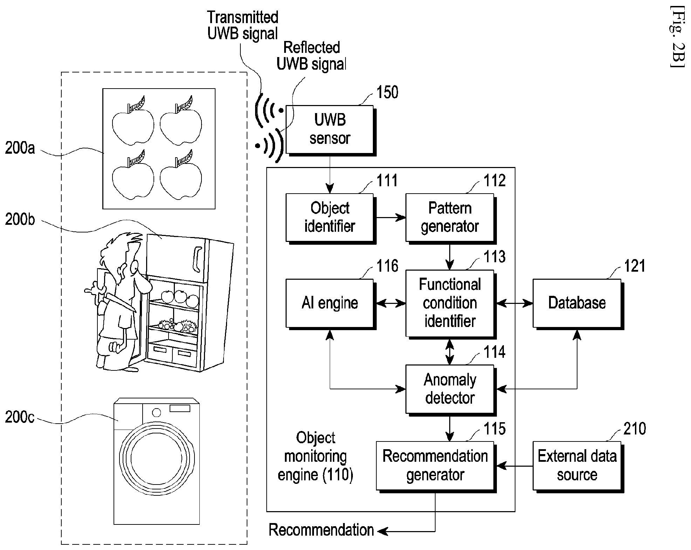

In an embodiment, the object monitoring engine 110 classifies a functional state/condition of the object based on the material property parameter and the motion parameter of the object using an Al engine 116 (as shown in FIG. 2B. The functional state/condition of the object indicates a performance of the object in performing a task/function assigned to the object. In another embodiment, the functional state/condition of the object indicates a maintenance required for the object. In another embodiment, the functional state/condition of the object indicates a quality/freshness of the object. Alternatively or additionally, the object monitoring engine 110 stores the generated pattern and corresponding functional state/condition of the generated pattern to the database 121.

In another embodiment, the object monitoring engine 110 determines the functional state/condition of the object based on the material property parameter and the motion parameter of the object using the Al engine 116. Alternatively or additionally, the object monitoring engine 110 generates recommendations based on the functional state/condition of the object. Alternatively or additionally, the object monitoring engine 110 provides the recommendation to a user of the object.

Although the FIG. 2A shows the hardware components of the electronic device 100 but it is to be understood that other embodiments are not limited thereon. In other embodiments, the electronic device 100 may include less or more number of components. Alternatively or additionally, the labels or names of the components are used only for illustrative purpose and does not limit the scope of the disclosure. One or more components can be combined together to perform same or substantially similar function for determining the anomaly of the object.

FIG. 2B is a block diagram of the object monitoring engine 110 for identifying the anomaly of the object based on the pattern, according to an embodiment. In an embodiment, the object monitoring engine 110 includes an object identifier 111, a pattern generator 112, an functional condition identifier 113, an anomaly detector 114, a recommendation generator 115, the AI engine 116.

The object identifier 111, the pattern generator 112, the functional condition identifier 113, the anomaly detector 114, the recommendation generator 1115, the Al engine 1116 are implemented by processing circuitry such as logic gates, integrated circuits, microprocessors, microcontrollers, memory circuits, passive electronic components, active electronic components, optical components, hardwired circuits, or the like, and may optionally be driven by a firmware. The circuits may, for example, be embodied in one or more semiconductor chips, or on substrate supports such as printed circuit boards and the like.

The UWB sensor 150 may transmit the UWB signal towards the object (e.g., 200a-200c) and may receive the reflected UWB signal corresponding to the transmitted UWB signal from the object. In some embodiments, the UWB sensor 150 may comprise transmit and/or receive UWB antennas for transmitting and/or receiving UWB signals. The object identifier 111 extracts the material property parameter and/or the motion parameter of the object from the reflected UWB signal and determines the variation in the material property parameter and/or the motion parameter over the time period. In an embodiment, the object identifier 111 identifies the object based on the reflected UWB signal. In an embodiment, the object identifier 111 identifies the object based on information received from an external data source 210 (e.g., internet, vendor) or the user. Alternatively or additionally, the object identifier 111 generates the noise free data of the reflected UWB signal and the binary image of the noise free data by pre-processing the reflected UWB signal. Alternatively or additionally, the object identifier 111 determines the material property parameter and the motion parameter of the object from the noise free data and the binary image.

In an embodiment, the object identifier 111 generates the noise free data of the reflected UWB signal by removing the DC noise and the carrier signal in the reflected UWB signal. Alternatively or additionally, the object identifier 111 filters the noise free data by removing the low-frequency time component from the noise free data. Alternatively or additionally, the object identifier 111 performs the background subtraction on the filtered data using the wavelets. Alternatively or additionally, the object identifier 111 generates the binary image of the noise free data using the output obtained due to the background subtraction on the filtered data.

The pattern generator 112 generates the pattern based on the variation in the material property parameter and/or the motion parameter of the object. The anomaly detector 114 identifies the anomaly of the object based on the generated pattern. In an embodiment, the anomaly detector 114 determines the performance coefficient from the generated pattern by training the latent correlation probabilistic model. Alternatively or additionally, the anomaly detector 114 determines whether the performance coefficient meets the threshold value. The anomaly detector 114 detects the anomaly of the object, in response to determining that the performance coefficient meets the threshold value. The anomaly detector 114 updates the generated pattern to the database 121, in response to determining that the performance coefficient does not meet the threshold value.

In an embodiment, the functional condition identifier 113 classifies the functional state/condition of the object based on the material property parameter and the motion parameter of the object using the Al engine 116. Further, the functional condition identifier 113 stores the generated pattern and corresponding the functional state/condition of the generated pattern to the database 121.

In another embodiment, the functional condition identifier 113 determines the functional state/condition of the object based on the material property parameter and the motion parameter of the object using the Al engine 116. In an embodiment, the functional condition identifier 113 determines the functional condition of the object based on information received from the external data source 210 or the user. The object monitoring engine 110 generates the recommendations based on the functional state/condition of the object. Further, the object monitoring engine 110 provides the recommendation to the user of the object.

At least one of the plurality of modules may be implemented through the Al engine 116. A function associated with the Al engine 116 may be performed through the non-volatile memory, the volatile memory, and the processor 130.

The one or a plurality of processors control the processing of the input data in accordance with a predefined operating rule or Al engine 116 stored in the non-volatile memory and the volatile memory. The predefined operating rule or artificial intelligence model is provided through training or learning.

In the present disclosure, being provided through learning may refer to applying a learning technique to a plurality of learning data, a predefined operating rule, or the Al engine 116 of a desired characteristic is made. The learning may be performed in a device itself in which the Al engine 116 according to an embodiment is performed, and/o may be implemented through a separate server/system.

The Al engine 116 may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann machine (RBM), deep belief network (DBN), bidirectional recurrent deep neural network (BRDNN), generative adversarial networks (GAN), and deep Q-networks.

The learning technique is a method for training a predetermined target device (e.g., a robot) using a plurality of learning data to cause, allow, or control the target device to make a determination or prediction. Examples of learning techniques include, but are not limited to, supervised learning, unsupervised learning, semi-supervised learning, or reinforcement learning.

Although the FIG. 2B shows the hardware components of the object monitoring engine 110 but it is to be understood that other embodiments are not limited thereon. In other embodiments, the object monitoring engine 110 may include less or more number of components. Further, the labels or names of the components are used only for illustrative purpose and does not limit the scope of the disclosure. One or more components can be combined together to perform same or substantially similar function for identifying the anomaly of the object based on the pattern.

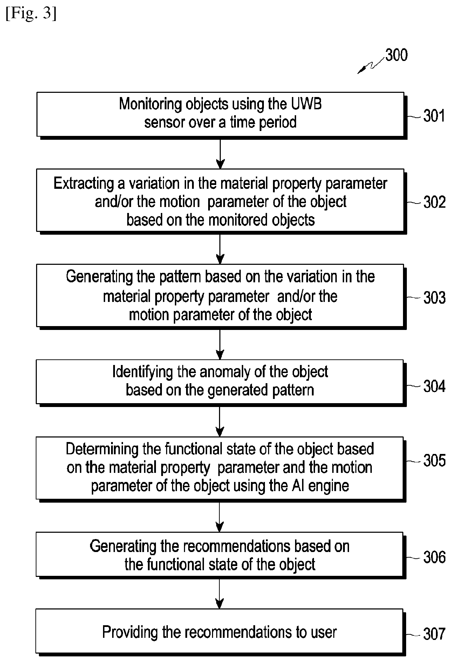

FIG. 3 is a flow diagram 300 illustrating a method for determining the anomaly of the object, according to an embodiment. In an embodiment, the object monitoring engine 110 performs steps 301-307 of the flow diagram 300. At step 301, the method includes monitoring the object using the UWB sensor 150 over the time period. At step 302, the method includes extracting the variation in the material property parameter and/or the motion parameter of the object based on the monitored object. At step 303, the method includes generating the pattern based on the variation in the material property parameter and/or the motion parameter of the object. At step 304, the method includes identifying the anomaly of the object based on the generated pattern. At step 305, the method includes determining the functional state of the object based on the material property parameter and the motion parameter of the object using the Al engine 116. At step 306, the method includes generating the recommendations based on the functional state of the object. At step 307, the method includes providing the recommendation to the user.

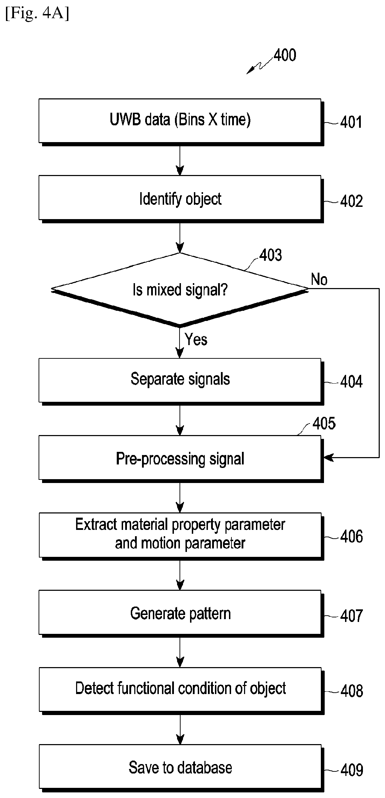

FIG. 4A is a flow diagram 400 illustrating a method for generating the pattern and detecting the functional condition of the object, according to an embodiment. Steps 401-409 of the flow diagram 400 describes an method of learning various functional conditions of the object for different types of pattern by the electronic device 100 when the object is in a normal condition. At 401, the object identifier 111 receives the reflected UWB signal in form of UWB data from the UWB sensor 150, where the UWB sensor 150 receives the reflected UWB signal from the object when the object is in the normal condition. At 402, the object identifier 111 identifies the object from which the reflected UWB signal is received by the UWB sensor 150 based on the UWB data. In an embodiment, the electronic device 100 identifies the object based on information received from the external data source 210 or the user.

At 403, the object identifier 111 checks whether the reflected UWB signal is mixed with the transmitted UWB signal using an autoencoder. At 404, the object identifier 111 separates the transmitted UWB signal from the reflected UWB signal and removes the transmitted UWB signal from the reflected UWB signal, upon determining that the reflected UWB signal is mixed with the transmitted UWB signal. At 405, the pattern generator 112 generates the noise free data of the identified object and the binary image of the noise free data by pre-processing the reflected UWB signal. The method flows from the step 403 to the 405, upon determining that the reflected UWB signal is not mixed with the transmitted UWB signal. At 406, the pattern generator 112 extracts the material property parameter and the motion parameter of the object from the noise free data and the binary image of the identified object and determines the variation in the material property parameter and/or the motion parameter over the time period.

At 407, the pattern generator 112 generates the pattern based on the variation in the material property parameter and the motion parameter of the object. At 408, the functional condition identifier 113 determines the functional condition of the object. In an embodiment, the electronic device 100 determines the functional condition of the object based on information received from the external data source 210 or the user. The functional condition identifier 113 correlates the functional condition of the object with the generated pattern. At 409, the functional condition identifier 113 stores the functional condition of the object with the correlated pattern to the database 121.

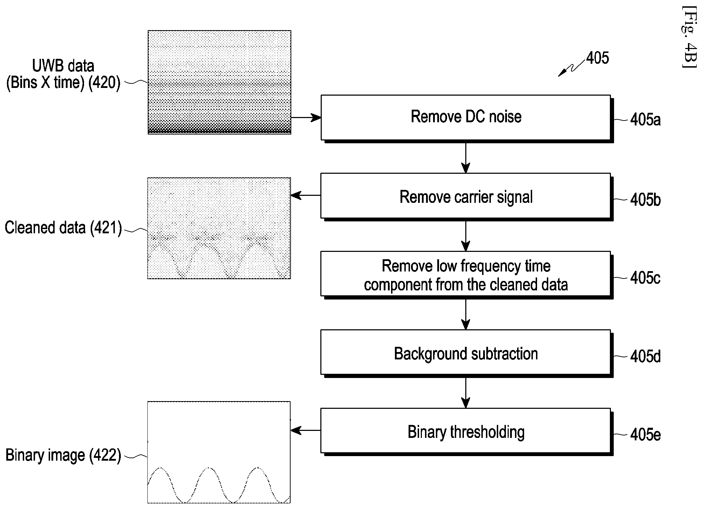

FIG. 4B is a flow diagram 405 illustrating a method for pre-processing the reflected UWB signal, according to an embodiment. At 405a, the pattern generator 112 removes the DC noise in the UWB data 420 (e.g., reflected UWB signal) by cutting off initial n number of bins in the UWB data 420, when *n* is a positive integer greater than zero. At 405b, upon removing the DC noise from the UWB data 420, the pattern generator 112 generates the noise free data 421 by removing the carrier signal from the UWB data 420 (e.g., reflected UWB signal). In an embodiment, the carrier signal is removed from the UWB data 420 by multiplying the UWB data 420 with a complex sinewave of frequency *f_{c}*. At 405c, the pattern generator 112 filters the noise free data 421 by removing the low frequency time component from the noise free data 421. At 405d, the pattern generator 112 performing the background subtraction on the filtered data using wavelets. At 405e, the pattern generator 112 generates the binary image 422 of the reflected signal performing binary thresholding on the output obtained due to the background subtraction on the filtered data.

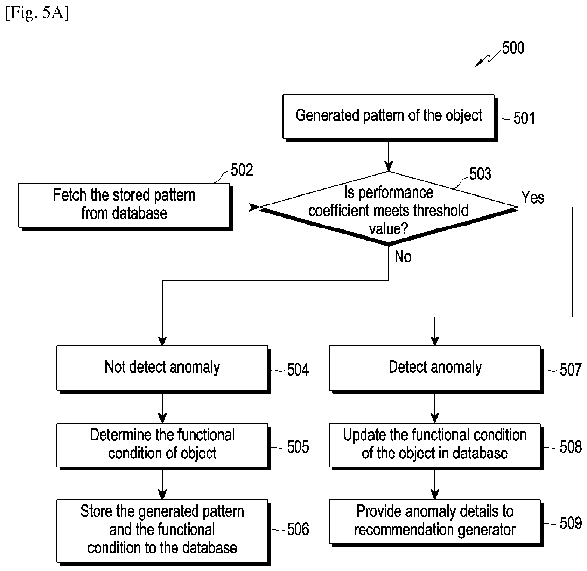

FIG. 5A is a flow diagram 500 illustrating a method for identifying the anomaly of the object in response to generating the pattern, according to an embodiment. The electronic device 100 is capable to detect the anomaly of the object after learning the various functional condition of the object for different types of pattern. In response to receiving a new reflected UWB signal from the object after the learning phase, the electronic device 100 identifies the object and generates the pattern based on the new reflected UWB signal using the steps 501-509.

At 501, the anomaly detector 114 receives the pattern generated based on the new reflected UWB signal from the pattern generator 112. Further, the anomaly detector 114 determines the performance coefficient from the generated pattern. At 502, the anomaly detector 114 fetches the stored patterns of the object from the database 121. Further, the anomaly detector 114 determines the threshold value based on the stored patterns of the object. At 503, the anomaly detector 114 checks whether the performance coefficient meets the threshold value using the latent correlation probabilistic model. At 504, the anomaly detector 114 does not detect the anomaly of the object, in response to determining that the generated pattern does not meet the pattern threshold.

At 505, the functional condition identifier 113 determines the functional condition of object as the normal condition upon not detecting the anomaly. At 506, the functional condition identifier 113 stores the functional condition of object with the generated pattern to the database 121. At 507, the anomaly detector 114 detects the anomaly of the object, in response to determining that the generated pattern meets the pattern threshold. At 508, the functional condition identifier 113 determines the functional condition of the object as an abnormal condition and updates the functional condition of object with the generated pattern to the database 121. At 509, the anomaly detector 114 provides the anomaly details to the recommendation generator 115.

The various actions, acts, blocks, steps, or the like in the flow diagrams 300, 400, 405, and 500 may be performed in the order presented, in a different order or simultaneously. Further, in some embodiments, some of the actions, acts, blocks, steps, or the like may be omitted, added, modified, skipped, or the like without departing from the scope of the disclosure.

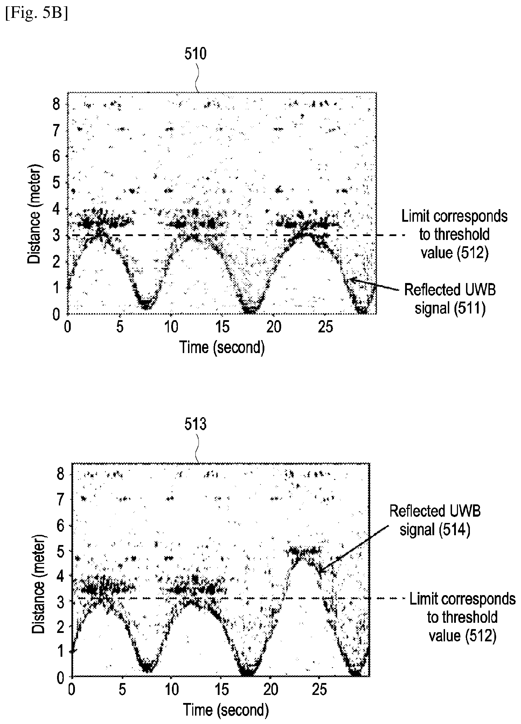

FIG. 5B illustrates noise free data of the reflected UWB signal, according to an embodiment. Notation 510 shows the noise free data generated from one reflected UWB signal 511, where the reflected UWB signal 511 is within a limit that corresponds to the threshold value 512. Therefore, the electronic device 100 does not detect the anomaly of the object. Notation 513 shows the noise free data generated from another reflected UWB signal 514, where the reflected UWB signal 514 crosses the limit corresponds to the threshold value 5512. Therefore, the electronic device 100 detects the anomaly of the object.

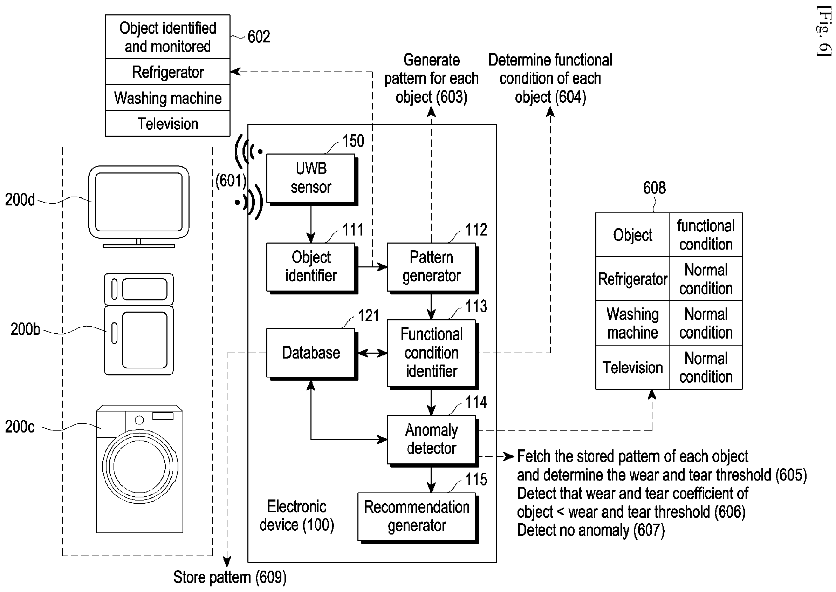

FIGS. 6-7 illustrate an example scenario of monitoring a functional performance of IoT devices using the electronic device 100, according to an embodiment. Consider that the electronic device 100 in this example scenario is a smartphone. The electronic device 100 may be located inside a home. The electronic device 100 contains the pattern of home appliances such as a television (TV) 200d), the refrigerator 200b, the washing machine 200c), etc. generated while the home appliances 200b-200d) are working in the normal condition. Referring to the FIG. 6, consider the electronic device 100 is monitoring the functional condition of the home appliances 200b-200d) after one week, where the home appliances 200b-200d) are working in the normal condition after one week.

At 601, the UWB sensor 150 receives the UWB signal reflected from the home appliances (e.g., 200b-200d). At 602, the object identifier 111 identifies each home appliance 200b-200d) as the TV 200d), the refrigerator 200b, and the washing machine 200c) based on the reflected UWB signal. At 603, the pattern generator 112 generates the pattern of each home appliance 200b-200d) based on the reflected UWB signal. At 604, the functional condition identifier 113 identifies that the functional condition (e.g., performance of each home appliance 200b-200d)) previously logged in the database 121 as the normal condition. At 605, the anomaly detector 114 fetches the stored pattern of each home appliance 200b-200d) from the database 121 and determines the wear and tear threshold of each home appliance 200b-200d). At 606, the anomaly detector 114 determines the wear and tear coefficient based on the generated pattern of each home appliance 200b-200d), and checks whether the wear and tear coefficient meets the wear and tear threshold.

The anomaly detector 114 detects that the wear and tear coefficient of the home appliances 200b-200d) does not meet the wear and tear threshold. That is, that the wear and tear coefficient of the home appliances 200b-200d) is less than the wear and tear threshold. At 607, in response to not meeting the wear and tear threshold by the wear and tear coefficient of the home appliance 200b-200d), the anomaly detector 114 detects no anomaly at the home appliances 200b-200d). At 608, the functional condition identifier 113 retains the functional condition of the home appliance 200b-200d) as the normal condition upon detecting no anomaly at the home appliances 200b-200d). At 609, the functional condition identifier 113 stores the pattern of each home appliance 200b-200d) to the database 121 for learning and future reference.

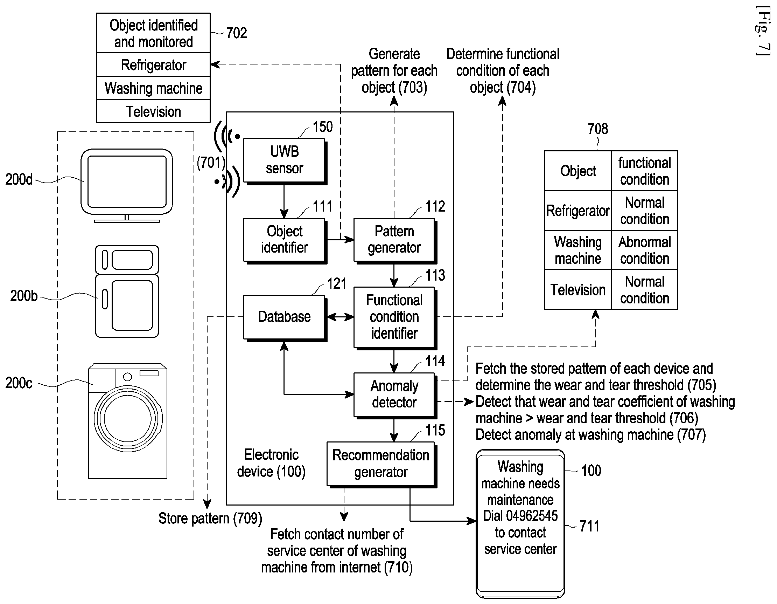

Referring to the FIG. 7, consider the electronic device 100 is monitoring the functional condition of the home appliances 200b-200d) after one month, where the home appliances 200b, 200d) are working in the normal condition whereas the washing machine 200c) has an abnormal vibration (e.g., puny motion) after one month. At 701, the UWB sensor 150 receives the UWB signal reflected from the home appliances 200b-200d). At 702, the object identifier 111 identifies each home appliance 200b-200d) as the TV 200d), the refrigerator 200b, and the washing machine 200c) based on the reflected UWB signal. At 703, the pattern generator 112 generates the pattern of each home appliance 200b-200d) based on the reflected UWB signal. At 704, the functional condition identifier 113 identifies that the functional condition (e.g. performance of each home appliance 200b-200d)) previously logged in the database 121 as the normal condition.

At 705, the anomaly detector 114 fetches the stored pattern of each home appliance 200b-200d) from the database 121 and determines the wear and tear threshold of each home appliance 200b-200d). At 706, the anomaly detector 114 determines the wear and tear coefficient based on the generated pattern of each home appliance 200b-200d), and checks whether the wear and tear coefficient meets the wear and tear threshold. The anomaly detector 114 detects that the wear and tear coefficient of the home appliances 200b, 200d) does not meet the wear and tear threshold. That is, the wear and tear coefficient of the home appliances 200b, 200d) is less than the wear and tear threshold. Alternatively or additionally, the anomaly detector 114 detects that the wear and tear coefficient of the washing machine 200c) meets the wear and tear threshold. That is, that the wear and tear coefficient of the washing machine 200c) is greater than the wear and tear threshold.

At 707, upon detecting that the wear and tear coefficient of the washing machine 200c) meets the wear and tear threshold, the anomaly detector 114 detects an anomaly at the washing machine 200c). Alternatively or additionally, the anomaly detector 114 detects no anomaly at the home appliances 200b, 200d). At 708, the functional condition identifier 113 retains the functional condition of the home appliance 200b, 200d) as the normal condition and updates the functional condition of the washing machine 200c) as the abnormal condition. At 709, the functional condition identifier 113 stores the pattern of each home appliance 200b-200d) to the database 121 for learning and future reference. At 710, the recommendation generator 115 fetches a contact number of a service center of the washing machine 200c) from internet, in response to detecting the anomaly at the washing machine 200c). At 711, the recommendation generator 115 displays the abnormal condition of the washing machine 200c), the contact number of the service center and an instruction to the user to call the service center for resolving the abnormal condition of the washing machine 200c) on a display of the electronic device 100 (e.g., smartphone).

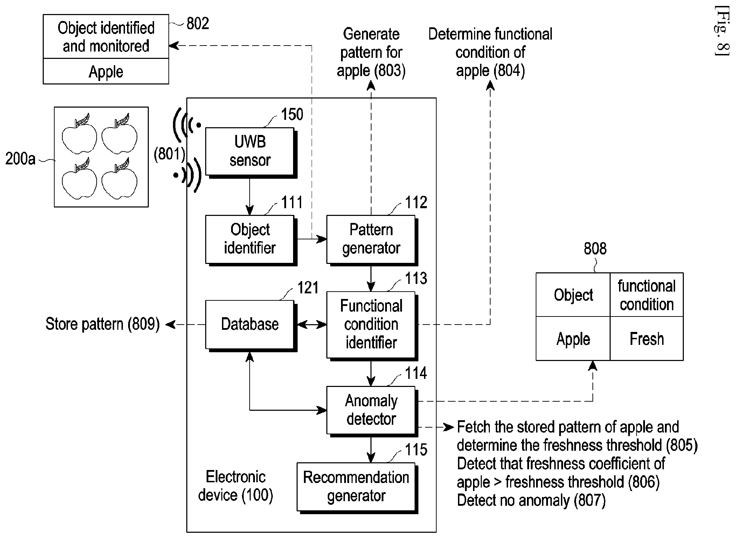

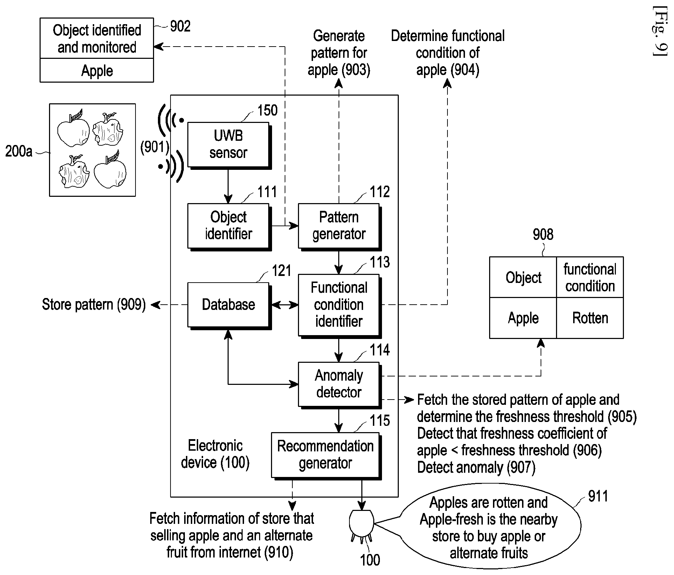

FIGS. 8 and 9 illustrate an example scenario of monitoring a quality of the apples 200a using the electronic device 100, according to an embodiment. Consider that the electronic device 100 in this example scenario is a smart speaker. The electronic device 100 may be located inside the home. The electronic device 100 contains the pattern of the apples 200a in the home generated while the apples 200a are fresh. Referring to the FIG. 8, consider the electronic device 100 is monitoring the functional condition, (e.g., the quality of the apples 200a) after two days, where the apples 200a are still fresh after 2 days.

At 801, the UWB sensor 150 receives the UWB signal reflected from the apples 200a. At 802, the object identifier 111 identifies the apples 200a based on the reflected UWB signal. At 803, the pattern generator 112 generates the pattern of the apples 200a based on the reflected UWB signal. At 804, the functional condition identifier 113 identifies that the functional condition (e.g., quality of the apples 200a previously logged in the database 121 as fresh. At 805, the anomaly detector 114 fetches the stored pattern of the apples 200a from the database 121 and determines the freshness threshold of the apples 200a.

At 806, the anomaly detector 114 determines the freshness coefficient based on the generated pattern of the apples 200a, and checks whether the freshness coefficient meets the freshness threshold. The anomaly detector 114 detects that the freshness coefficient of the apples 200a does not meet the freshness threshold. That is, that the freshness coefficient is greater than the freshness threshold. At 807, in response to not meeting the freshness threshold by the freshness coefficient of the apples 200a the anomaly detector 114 detects no anomaly at the apples 200a. At 808, the functional condition identifier 113 retains the functional condition of the apples 200a as fresh only upon detecting no anomaly at the apples 200a. At 809, the functional condition identifier 113 stores the pattern of the apples 200a to the database 121 for learning and future reference.

Referring to the FIG. 9, consider the electronic device 100 is monitoring the functional condition, (e.g. the quality of the apples 200a after one week), where the apples 200a are rotten (e.g. the dielectric constant and/or permeability of the apples 200a is changed) after one week. At 901, the UWB sensor 150 receives the UWB signal reflected from the apples 200a. At 902, the object identifier 111 identifies apples 200a based on the reflected UWB signal. At 903, the pattern generator 112 generates the pattern of the apples 200a based on the reflected UWB signal. At 904, the functional condition identifier 113 identifies that the functional condition (e.g., the quality of the apples 200a) previously logged in the database 121 as fresh. At 905, the anomaly detector 114 fetches the stored pattern of the apples 200a from the database 121 and determines the freshness threshold of the apples 200a. At 906, the anomaly detector 114 determines the freshness coefficient based on the generated pattern of the apples 200a, and checks whether the freshness coefficient meets the freshness threshold.

The anomaly detector 114 detects that the freshness coefficient of the apples 200a meets the freshness threshold. That is, that the freshness coefficient is less than freshness threshold. At 907, upon meeting to the freshness threshold by the freshness coefficient of the apples 200a, the anomaly detector 114 detects anomaly at the apples 200a. At 908, the functional condition identifier 113 updates the functional condition of the apples 200a as rotten. At 909, the functional condition identifier 113 stores the pattern of the apples 200a to the database 121 for learning and future reference. At 910, the recommendation generator 115 fetches information of a store selling apples and alternate fruits from the internet, in response to detecting the anomaly at the apples 200a. At 911, the recommendation generator 115 provides audio to the user about the rotten apples 200a and the information of the store selling apples and the alternate fruits using a speaker of the electronic device 100 (e.g., smart speaker).

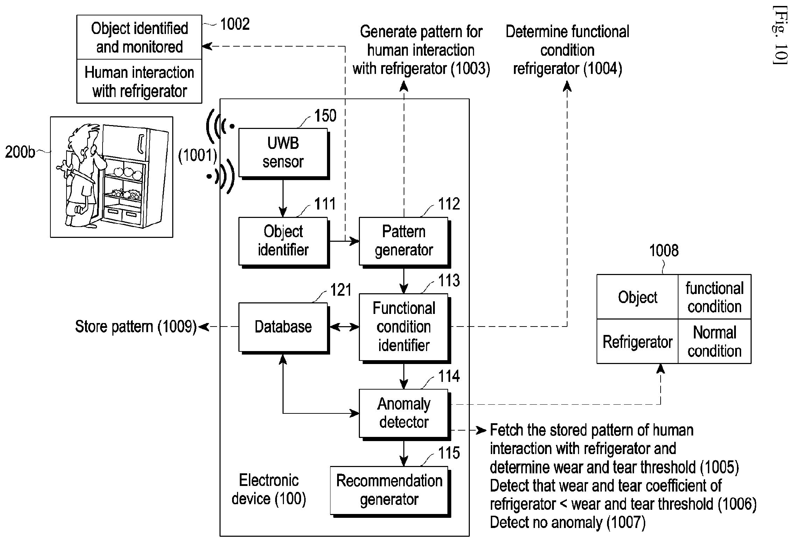

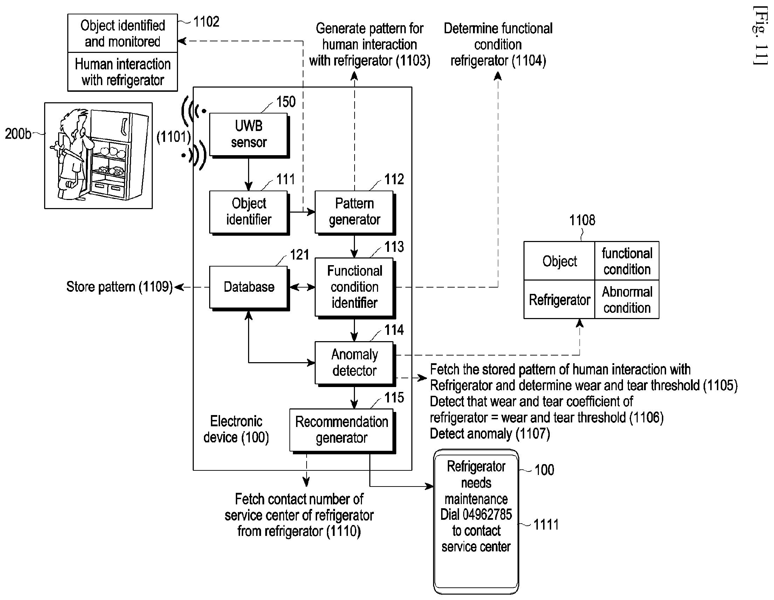

FIGS. 10 and 11 illustrate an example scenario of monitoring the performance of the refrigerator 200b using the electronic device 100, according to an embodiment. Consider that the electronic device 100 in this example scenario is the smartphone. The electronic device 100 may be located inside the home. The user generally opens a door of the refrigerator to take fruits and vegetables from the refrigerator 200b. The electronic device 100 contains the pattern of this interaction of the user with the refrigerator 200b, where the pattern is generated while the user opens the door smoothly. Referring to the FIG. 10, consider the electronic device 100 is monitoring the functional condition of the refrigerator 200b after one week, where the operation of the door of the refrigerator 200b is still smooth to open and close after one week.

At 1001, the UWB sensor 150 receives the UWB signal reflected from the refrigerator 200b and the user while the user smoothly opens the door. At 1002, the object identifier 111 identifies the user and the refrigerator 200b based on the reflected UWB signal. At 1003, the pattern generator 112 generates the pattern of the interaction of the user with the refrigerator 200b based on the reflected UWB signal. At 1004, the functional condition identifier 113 identifies that the functional condition (e.g., performance of the refrigerator 200b) previously logged in the database 121 as the normal condition. At 1005, the anomaly detector 114 fetches the stored pattern of the user interaction with the refrigerator 200b from the database 121 and determines the wear and tear threshold of the refrigerator 200b.

At 1006, the anomaly detector 114 determines the wear and tear coefficient based on the generated pattern of the user interaction with the refrigerator 200b, and checks whether the wear and tear coefficient meets the wear and tear threshold. The anomaly detector 114 detects that the wear and tear coefficient of the refrigerator 200b does not meet the wear and tear threshold. That is, that the wear and tear coefficient of the refrigerator 200b is less than wear and tear threshold. At 1007, in response to not meeting the wear and tear threshold by the wear and tear coefficient of the refrigerator 200b, the anomaly detector 114 detects no anomaly at the refrigerator 200b. At 1008, the functional condition identifier 113 retains the functional condition of the refrigerator 200b as the normal condition only upon detecting no anomaly at the refrigerator 200b. At 1009, the functional condition identifier 113 stores the pattern of the refrigerator 200b to the database 121 for learning and future reference.

Referring to the FIG. 11, consider the electronic device 100 is monitoring the functional condition of the refrigerator 200b after one year, where the door of the refrigerator 200b is hard to open after one year. For example, the colossal motion appears due to opening the door of the refrigerator 200b after one year. At 1101, the UWB sensor 150 receives the UWB signal reflected from the refrigerator 200b and the user while the user opens the door by making colossal motion. At 1102, the object identifier 111 identifies the user and the refrigerator based on the reflected UWB signal. At 1103, the pattern generator 112 generates the pattern of the interaction of the user with the refrigerator 200b based on the reflected UWB signal.

At 1104, the functional condition identifier 113 identifies that the functional condition (e.g., the performance of the refrigerator 200b) previously logged in the database 121 as the normal condition. At 1105, the anomaly detector 114 fetches the stored pattern of the user interaction with the refrigerator 200b from the database 121 and determines the wear and tear threshold of the refrigerator 200b. At 1106, the anomaly detector 114 determines the wear and tear coefficient based on the generated pattern of the user interaction with the refrigerator 200b, and checks whether the wear and tear coefficient meets the wear and tear threshold.

The anomaly detector 114 detects that the wear and tear coefficient of the refrigerator 200b meets the wear and tear threshold. That is, that the wear and tear coefficient of the refrigerator 200b meets (e.g., is equal or greater than) the wear and tear threshold. At 1107, upon meeting to the wear and tear threshold by the wear and tear coefficient of the refrigerator 200b, the anomaly detector 114 detects anomaly at the refrigerator 200b. At 1108, the functional condition identifier 113 updates the functional condition of the refrigerator 200b as the abnormal condition. At 1109, the functional condition identifier 113 stores the pattern of the refrigerator 200b to the database 121 for learning and future reference.

At 1110, the recommendation generator 115 fetches the contact number of the service center of the refrigerator 200b from a datastore of the refrigerator 200b, in response to detecting the anomaly at the refrigerator 200b. At 1111, the recommendation generator 115 provides displays the abnormal condition of the refrigerator 200b, the contact number of the service center, and the instruction to the user to call the service center for resolving the abnormal condition of the refrigerator 200b on a display of the electronic device 100 (e.g., smartphone.

The foregoing description of the embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of the appended claims. It is to be understood that the phraseology or terminology employed herein is for the purpose of description and not of limitation. Therefore, while the embodiments herein have been described in terms of example embodiments, those skilled in the art will recognize that the embodiments herein can be practiced with modification within the scope of the appended claims.

## Claims

1. A method of managing objects by an electronic device, comprising:
monitoring (301), using an ultra-wide band, UWB, sensor of the electronic device, at least one object over a time period;
based on the monitoring of the at least one object, extracting (302) a variation in at least one of a material property parameter of the at least one object and a motion parameter of the at least one object;
generating (303) a pattern based on the variation in the at least one of the material property parameter and the motion parameter; and
identifying (304), based on the generated pattern, an anomaly of the at least one object,
wherein the extracting of the variation comprises:
identifying the at least one object based on a reflected UWB signal received at the UWB sensor from the at least one object and information received from an external data source or a user.

2. The method as claimed in claim 1, further comprising:
determining (305), using an artificial intelligence, Al, engine, a functional state of the at least one object based on the material property parameter and the motion parameter;
generating (306) at least one recommendation based on the functional state of the at least one object; and
providing (307) the at least one recommendation to a user of the at least one object.

3. The method as claimed in claim 1, wherein the extracting of the variation, comprises:
generating noise free data of the reflected UWB signal and a binary image of the noise free data by pre-processing the reflected UWB signal; and
determining the variation in least one of the material property parameter and the motion parameter from the noise free data and the binary image.

4. The method as claimed in claim 3, wherein the generating of the noise free data of the reflected UWB signal and the binary image of the noise free data, comprises:
generating the noise free data of the reflected UWB signal by removing a direct current, DC, noise and a carrier signal in the reflected UWB signal;
filtering the noise free data by removing a low frequency time component from the noise free data;
performing a background subtraction on the filtered noise free data using wavelets; and
generating the binary image of the noise free data using an output obtained from the performing of the background subtraction on the filtered noise free data.

5. The method as claimed in claim 1, wherein the identifying (304) of the anomaly, comprises:
determining a performance coefficient from the generated pattern; and
determining whether the performance coefficient meets a threshold value.
performing one of:
based on determining that the performance coefficient meets the threshold value, detecting the anomaly of the at least one object, or
based on determining that the performance coefficient does not meet the threshold value, updating the generated pattern to a database.

6. The method as claimed in claim 5, wherein the updating of the generated pattern to the database, comprises:
classifying, using an artificial intelligence, Al, engine, a functional state of the at least one object based on the material property parameter and the motion parameter; and
storing, in the database, the generated pattern and the functional state of the at least one object corresponding to the generated pattern.

7. The method as claimed in claim 1, wherein the material property parameter comprises a dielectric constant of the at least one object, and the motion parameter comprises a polynomial phase signal, PPS, parameter of the at least one object.

8. The method as claimed in claim 1, wherein the monitoring (301) of the at least one object, comprises:
transmitting, using the UWB sensor, a reference UWB signal towards the at least one object;
and
receiving, using the UWB sensor, a reflected UWB signal corresponding to the transmitted reference UWB signal from the at least one object.

9. An electronic device (100) for managing objects, the electronic device comprising:
an ultra-wide band, UWB, sensor (150);
a memory (120) storing one or more instructions; and
a processor (130) communicatively coupled to the UWB sensor and the memory, wherein the one or more instructions , when executed by the processor (130), cause the electronic device to:
monitor, using the UWB sensor, at least one object over a time period;
based on the monitoring of the at least one object, extract a variation in at least one of a material property parameter of the at least one object and a motion parameter of the at least one object;
generate a pattern based on the variation in the at least one of the material property parameter
and the motion parameter; and
identify, based on the generated pattern, an anomaly of the at least one object,
wherein for extracting of the variation, the one or more instructions , when executed by the processor (130), cause the electronic device to:
identify the at least one object based on a reflected UWB signal received at the UWB sensor from the at least one object and information received from an external data source or a user.

10. The electronic device as claimed in claim 9, wherein the one or more instructions, when executed by the processor (130), cause the electronic device to:
determine, using an artificial intelligence, Al, engine, a functional state of the at least one object based on the material property parameter and the motion parameter;
generate at least one recommendation based on the functional state of the at least one object;
and
provide the at least one recommendation to a user of the at least one object.

11. The electronic device as claimed in claim 9, wherein the one or more instructions, when executed by the processor (130), cause the electronic device to:
generate noise free data of the reflected UWB signal and a binary image of the noise free data by pre-processing the reflected UWB signal; and
determine the variation in least one of the material property parameter and the motion parameter from the noise free data and the binary image.

12. The electronic device as claimed in claim 11, wherein the one or more instructions, when executed by the processor (130), cause the electronic device to:
generate the noise free data of the reflected UWB signal by removing a direct current, DC, noise and a carrier signal in the reflected UWB signal;
filter the noise free data by removing a low frequency time component from the noise free data;
perform a background subtraction on the filtered noise free data using wavelets; and
generate the binary image of the noise free data using an output obtained from the background subtraction performed on the filtered noise free data.

13. The electronic device as claimed in claim 9, wherein the one or more instructions, when executed by the processor (130), cause the electronic device to:
determine a performance coefficient from the generated pattern;
determine whether the performance coefficient meets a threshold value; and
perform at least one of:
based on determining that the performance coefficient meets the threshold value, detecting the anomaly of the at least one object ; and
based on determining that the performance coefficient does not meet the threshold value, updating the generated pattern to a database.

14. A method of managing objects by an electronic device, the method comprising:
monitoring (301), over a time period using an ultra-wide band, UWB, sensor, a variation in at least one of a material property and a movement associated with at least one object;
extracting (302) a dielectric constant and polynomial phase signal, PPS, parameters of the at least one object indicative of an extent of the variation of the material property and the movement associated with the at least one object;
determining (303) a pattern based on the dielectric constant and the PPS parameters; and
providing (306) to a user, at least one performance recommendation of the at least one object corresponding to the determined pattern,
wherein the extracting (302) comprises:
identifying the at least one object based on a reflected UWB signal received at the UWB sensor from the at least one object and information received from an external data source or a user;.

15. The method as claimed in claim 14, wherein the providing (307) of the at least one performance recommendation comprises:
determining, using an artificial intelligence, Al, engine, a functional state of the at least one object based on the material property and the movement associated with the at least one object; and
generating the at least one performance recommendation based on the functional state of the at least one object.

## Patentansprüche

1. Verfahren zum Verwalten von Objekten durch eine elektronische Vorrichtung, umfassend:
Überwachen (301), unter Verwendung eines Ultrabreitbandsensors, UWB-Sensors, der elektronischen Vorrichtung, mindestens eines Objekts über einen Zeitraum;
basierend auf dem Überwachen des mindestens einen Objekts Extrahieren (302) einer Variation mindestens eines von einem Materialeigenschaftsparameter des mindestens einen Objekts und einem Bewegungsparameter des mindestens einen Objekts;
Generieren (303) eines Musters basierend auf der Variation des mindestens einen von dem Materialeigenschaftsparameter und dem Bewegungsparameter; und
Identifizieren (304), basierend auf dem generierten Muster, einer Anomalie des mindestens einen Objekts,
wobei das Extrahieren der Variation Folgendes umfasst:
Identifizieren des mindestens einen Objekts basierend auf einem reflektierten UWB-Signal, das an dem UWB-Sensor von dem mindestens einen Objekt empfangen wird, und Informationen, die von einer externen Datenquelle oder einem Benutzer empfangen werden.

2. Verfahren nach Anspruch 1, ferner umfassend:
Bestimmen (305) eines Funktionszustands des mindestens einen Objekts basierend auf dem Materialeigenschaftsparameter und dem Bewegungsparameter unter Verwendung einer Engine künstlicher Intelligenz, KI-Engine;
Generieren (306) mindestens einer Empfehlung basierend auf dem Funktionszustand des mindestens einen Objekts; und
Bereitstellen (307) der mindestens einen Empfehlung für einen Benutzer des mindestens einen Objekts.

3. Verfahren nach Anspruch 1, wobei das Extrahieren der Variation Folgendes umfasst:
Generieren rauschfreier Daten des reflektierten UWB-Signals und eines Binärbilds der rauschfreien Daten durch Vorverarbeiten des reflektierten UWB-Signals; und
Bestimmen der Variation mindestens eines von dem Materialeigenschaftsparameter und dem Bewegungsparameter aus den rauschfreien Daten und dem Binärbild.

4. Verfahren nach Anspruch 3, wobei das Generieren der rauschfreien Daten des reflektierten UWB-Signals und des Binärbilds der rauschfreien Daten Folgendes umfasst:
Generieren der rauschfreien Daten des reflektierten UWB-Signals durch Entfernen eines Gleichstromrauschens, DC-Rauschens, und eines Trägersignals in dem reflektierten UWB-Signal;
Filtern der rauschfreien Daten durch Entfernen einer Niederfrequenzzeitkomponente aus den rauschfreien Daten;
Durchführen einer Hintergrundsubtraktion an den gefilterten rauschfreien Daten unter Verwendung von Wavelets; und
Generieren des Binärbilds der rauschfreien Daten unter Verwendung einer Ausgabe, die aus dem Durchführen der Hintergrundsubtraktion an den gefilterten rauschfreien Daten erhalten wird.

5. Verfahren nach Anspruch 1, wobei das Identifizieren (304) der Anomalie Folgendes umfasst:
Bestimmen eines Leistungskoeffizienten aus dem generierten Muster; und
Bestimmen, ob der Leistungskoeffizient einen Schwellenwert erfüllt,
Durchführen eines von Folgenden:
Detektieren der Anomalie des mindestens einen Objekts basierend auf dem Bestimmen, dass der Leistungskoeffizient den Schwellenwert erfüllt, oder
basierend auf dem Bestimmen, dass der Leistungskoeffizient den Schwellenwert nicht erfüllt, Aktualisieren des generierten Musters in einer Datenbank.

6. Verfahren nach Anspruch 5, wobei das Aktualisieren des generierten Musters in der Datenbank Folgendes umfasst:
Klassifizieren eines Funktionszustands des mindestens einen Objekts basierend auf dem Materialeigenschaftsparameter und dem Bewegungsparameter unter Verwendung einer Engine künstlicher Intelligenz, KI-Engine; und
Speichern, in der Datenbank, des generierten Musters und des Funktionszustands des mindestens einen Objekts, das dem generierten Muster entspricht.

7. Verfahren nach Anspruch 1, wobei der Materialeigenschaftsparameter eine Dielektrizitätskonstante des mindestens einen Objekts umfasst und der Bewegungsparameter einen Polynom-Phasen-Signalparameter, PPS-Parameter, des mindestens einen Objekts umfasst.

8. Verfahren nach Anspruch 1, wobei das Überwachen (301) des mindestens einen Objekts Folgendes umfasst:
Übertragen, unter Verwendung des UWB-Sensors, eines Referenz-UWB-Signals zu dem mindestens einen Objekts hin; und
Empfangen, unter Verwendung des UWB-Sensors, eines reflektierten UWB-Signals, das dem übertragenen Referenz-UWB-Signal entspricht, von dem mindestens einen Objekt.

9. Elektronische Vorrichtung (100) zum Verwalten von Objekten, wobei die elektronische Vorrichtung Folgendes umfasst:
einen Ultrabreitbandsensor, UWB-Sensor (150);
einen Speicher (120), der eine oder mehrere Anweisungen speichert; und
einen Prozessor (130), der kommunikativ mit dem UWB-Sensor und dem Speicher gekoppelt ist, wobei die eine oder mehreren Anweisungen, wenn sie durch den Prozessor (130) ausgeführt werden, die elektronische Vorrichtung zu Folgendem veranlassen:
Überwachen, unter Verwendung des UWB-Sensors, mindestens eines Objekts über einen Zeitraum;
basierend auf dem Überwachen des mindestens einen Objekts Extrahieren einer Variation mindestens eines von einem Materialeigenschaftsparameter des mindestens einen Objekts und einem Bewegungsparameter des mindestens einen Objekts;
Generieren eines Musters basierend auf der Variation des mindestens einen von dem Materialeigenschaftsparameter und dem Bewegungsparameter; und
Identifizieren, basierend auf dem generierten Muster, einer Anomalie des mindestens einen Objekts,
wobei zum Extrahieren der Variation die eine oder mehreren Anweisungen, wenn sie durch den Prozessor (130) ausgeführt werden, die elektronische Vorrichtung zu Folgendem veranlassen:
Identifizieren des mindestens einen Objekts basierend auf einem reflektierten UWB-Signal, das an dem UWB-Sensor von dem mindestens einen Objekt empfangen wird, und Informationen, die von einer externen Datenquelle oder einem Benutzer empfangen werden.

10. Elektronische Vorrichtung nach Anspruch 9, wobei die eine oder mehreren Anweisungen, wenn sie durch den Prozessor (130) ausgeführt werden, die elektronische Vorrichtung zu Folgendem veranlassen:
Bestimmen eines Funktionszustands des mindestens einen Objekts basierend auf dem Materialeigenschaftsparameter und dem Bewegungsparameter unter Verwendung einer Engine künstlicher Intelligenz, KI-Engine;
Generieren mindestens einer Empfehlung basierend auf dem Funktionszustand des mindestens einen Objekts; und
Bereitstellen der mindestens einen Empfehlung für einen Benutzer des mindestens einen Objekts.

11. Elektronische Vorrichtung nach Anspruch 9, wobei die eine oder mehreren Anweisungen, wenn sie durch den Prozessor (130) ausgeführt werden, die elektronische Vorrichtung zu Folgendem veranlassen:
Generieren rauschfreier Daten des reflektierten UWB-Signals und eines Binärbilds der rauschfreien Daten durch Vorverarbeiten des reflektierten UWB-Signals; und
Bestimmen der Variation mindestens eines von dem Materialeigenschaftsparameter und dem Bewegungsparameter aus den rauschfreien Daten und dem Binärbild.

12. Elektronische Vorrichtung nach Anspruch 11, wobei die eine oder mehreren Anweisungen, wenn sie durch den Prozessor (130) ausgeführt werden, die elektronische Vorrichtung zu Folgendem veranlassen:
Generieren der rauschfreien Daten des reflektierten UWB-Signals durch Entfernen eines Gleichstromrauschens, DC-Rauschens, und eines Trägersignals in dem reflektierten UWB-Signal;
Filtern der rauschfreien Daten durch Entfernen einer Niederfrequenzzeitkomponente aus den rauschfreien Daten;
Durchführen einer Hintergrundsubtraktion an den gefilterten rauschfreien Daten unter Verwendung von Wavelets; und
Generieren des Binärbilds der rauschfreien Daten unter Verwendung einer Ausgabe, die aus der Hintergrundsubtraktion, die an den gefilterten rauschfreien Daten durchgeführt wurde, erhalten wird.

13. Elektronische Vorrichtung nach Anspruch 9, wobei die eine oder mehreren Anweisungen, wenn sie durch den Prozessor (130) ausgeführt werden, die elektronische Vorrichtung zu Folgendem veranlassen:
Bestimmen eines Leistungskoeffizienten aus dem generierten Muster;
Bestimmen, ob der Leistungskoeffizient einen Schwellenwert erfüllt; und
Durchführen mindestens eines von Folgenden:
Detektieren der Anomalie des mindestens einen Objekts basierend auf dem Bestimmen, dass der Leistungskoeffizient den Schwellenwert erfüllt; und
basierend auf dem Bestimmen, dass der Leistungskoeffizient den Schwellenwert nicht erfüllt, Aktualisieren des generierten Musters in einer Datenbank.

14. Verfahren zum Verwalten von Objekten durch eine elektronische Vorrichtung, wobei das Verfahren Folgendes umfasst:
Überwachen (301), über einen Zeitraum unter Verwendung eines Ultrabreitbandsensors, UWB-Sensors, einer Variation mindestens eines von einer Materialeigenschaft und einer Bewegung, die mindestens einem Objekt zugeordnet sind;
Extrahieren (302) einer Dielektrizitätskonstante und von Polynom-Phasen-Signalparametern, PPS-Parametern, des mindestens einen Objekts, die ein Ausmaß der Variation der Materialeigenschaft und der Bewegung, die dem mindestens einen Objekt zugeordnet sind, angibt;
Bestimmen (303) eines Musters basierend auf der Dielektrizitätskonstante und den PPS-Parametern; und
Bereitstellen (306), für einen Benutzer, mindestens einer Leistungsempfehlung des mindestens einen Objekts, das dem bestimmten Muster entspricht,
wobei das Extrahieren (302) Folgendes umfasst:
Identifizieren des mindestens einen Objekts basierend auf einem reflektierten UWB-Signal, das an dem UWB-Sensor von dem mindestens einen Objekt empfangen wird, und Informationen, die von einer externen Datenquelle oder einem Benutzer empfangen werden.

15. Verfahren nach Anspruch 14, wobei das Bereitstellen (307) der mindestens einen Leistungsempfehlung Folgendes umfasst:
Bestimmen eines Funktionszustands des mindestens einen Objekts basierend auf der Materialeigenschaft und der Bewegung, die dem mindestens einen Objekt zugeordnet sind, unter Verwendung einer Engine künstlicher Intelligenz, KI-Engine; und
Generieren der mindestens einen Leistungsempfehlung basierend auf dem Funktionszustand des mindestens einen Objekts.

## Revendications

1. Procédé de gestion d'objets par un dispositif électronique, comprenant :
la surveillance (301), à l'aide d'un capteur à bande ultra-large, UWB, du dispositif électronique, d'au moins un objet pendant une période de temps ;
sur la base de la surveillance de l'au moins un objet, l'extraction (302) d'une variation d'au moins l'un d'un paramètre de propriété de matériau de l'au moins un objet et d'un paramètre de mouvement de l'au moins un objet ;
la génération (303) d'un motif sur la base de la variation de l'au moins un du paramètre de propriété de matériau et du paramètre de mouvement ; et
l'identification (304), sur la base du motif généré, d'une anomalie de l'au moins un objet,
dans lequel l'extraction de la variation comprend :
l'identification de l'au moins un objet sur la base d'un signal UWB réfléchi reçu au niveau du capteur UWB provenant de l'au moins un objet et d'informations reçues provenant d'une source de données externe ou d'un utilisateur.

2. Procédé selon la revendication 1, comprenant en outre :
la détermination (305), à l'aide d'un moteur d'intelligence artificielle, IA, d'un état fonctionnel de l'au moins un objet sur la base du paramètre de propriété de matériau et du paramètre de mouvement ;
la génération (306) d'au moins une recommandation sur la base de l'état fonctionnel de l'au moins un objet ; et
la fourniture (307) de l'au moins une recommandation à un utilisateur de l'au moins un objet.

3. Procédé selon la revendication 1, dans lequel l'extraction de la variation comprend :
la génération de données sans bruit du signal UWB réfléchi et d'une image binaire des données sans bruit par prétraitement du signal UWB réfléchi ; et
la détermination de la variation d'au moins l'un du paramètre de propriété de matériau et du paramètre de mouvement à partir des données sans bruit et de l'image binaire.

4. Procédé selon la revendication 3, dans lequel la génération des données sans bruit du signal UWB réfléchi et de l'image binaire des données sans bruit comprend :
la génération des données sans bruit du signal UWB réfléchi par suppression d'un bruit de courant continu, CC, et d'un signal porteur dans le signal UWB réfléchi ;
le filtrage des données sans bruit par suppression d'une composante temporelle basse fréquence des données sans bruit ;
la réalisation d'une soustraction d'arrière-plan sur les données sans bruit filtrées à l'aide d'ondelettes ; et
la génération de l'image binaire des données sans bruit à l'aide d'une sortie obtenue à partir de la réalisation de la soustraction d'arrière-plan sur les données sans bruit filtrées.

5. Procédé selon la revendication 1, dans lequel l'identification (304) de l'anomalie comprend :
la détermination d'un coefficient de performance à partir du motif généré ; et
la détermination du fait que le coefficient de performance satisfait ou non à une valeur seuil,
la réalisation de l'une parmi :
sur la base de la détermination du fait que le coefficient de performance satisfait à la valeur seuil, la détection de l'anomalie de l'au moins un objet, ou
sur la base de la détermination du fait que le coefficient de performance ne satisfait pas à la valeur seuil, la mise à jour du motif généré dans une base de données.

6. Procédé selon la revendication 5, dans lequel la mise à jour du motif généré dans la base de données comprend :
la classification, à l'aide d'un moteur d'intelligence artificielle, IA, d'un état fonctionnel de l'au moins un objet sur la base du paramètre de propriété de matériau et du paramètre de mouvement ; et
le stockage, dans la base de données, du motif généré et de l'état fonctionnel de l'au moins un objet correspondant au motif généré.

7. Procédé selon la revendication 1, dans lequel le paramètre de propriété de matériau comprend une constante diélectrique de l'au moins un objet, et le paramètre de mouvement comprend un paramètre de signal de phase polynomiale, PPS, de l'au moins un objet.

8. Procédé selon la revendication 1, dans lequel la surveillance (301) de l'au moins un objet comprend :
la transmission, à l'aide du capteur UWB, d'un signal UWB de référence vers l'au moins un objet ; et
la réception, à l'aide du capteur UWB, d'un signal UWB réfléchi correspondant au signal UWB de référence transmis provenant de l'au moins un objet.

9. Dispositif électronique (100) pour la gestion d'objets, le dispositif électronique comprenant :
un capteur à bande ultra-large, UWB (150) ;
une mémoire (120) stockant une ou plusieurs instructions ; et
un processeur (130) couplé en communication au capteur UWB et à la mémoire, dans lequel la ou les instructions, lorsqu'elles sont exécutées par le processeur (130), amènent le dispositif électronique à :
surveiller, à l'aide du capteur UWB, au moins un objet pendant une période de temps ;
sur la base de la surveillance de l'au moins un objet, extraire une variation d'au moins l'un d'un paramètre de propriété de matériau de l'au moins un objet et d'un paramètre de mouvement de l'au moins un objet ;
générer un motif sur la base de la variation de l'au moins un du paramètre de propriété de matériau et du paramètre de mouvement ; et
identifier, sur la base du motif généré, une anomalie de l'au moins un objet,
dans lequel, pour extraire la variation, la ou les instructions, lorsqu'elles sont exécutées par le processeur (130), amènent le dispositif électronique à :
identifier l'au moins un objet sur la base d'un signal UWB réfléchi reçu au niveau du capteur UWB provenant de l'au moins un objet et d'informations reçues provenant d'une source de données externe ou d'un utilisateur.

10. Dispositif électronique selon la revendication 9, dans lequel la ou les instructions, lorsqu'elles sont exécutées par le processeur (130), amènent le dispositif électronique à :
déterminer, à l'aide d'un moteur d'intelligence artificielle, IA, un état fonctionnel de l'au moins un objet sur la base du paramètre de propriété de matériau et du paramètre de mouvement ;
générer au moins une recommandation sur la base de l'état fonctionnel de l'au moins un objet ; et
fournir l'au moins une recommandation à un utilisateur de l'au moins un objet.

11. Dispositif électronique selon la revendication 9, dans lequel la ou les instructions, lorsqu'elles sont exécutées par le processeur (130), amènent le dispositif électronique à :
générer des données sans bruit du signal UWB réfléchi et une image binaire des données sans bruit par prétraitement du signal UWB réfléchi ; et
déterminer la variation d'au moins l'un du paramètre de propriété de matériau et du paramètre de mouvement à partir des données sans bruit et de l'image binaire.

12. Dispositif électronique selon la revendication 11, dans lequel la ou les instructions, lorsqu'elles sont exécutées par le processeur (130), amènent le dispositif électronique à :
générer les données sans bruit du signal UWB réfléchi par suppression d'un bruit de courant continu, CC, et d'un signal porteur dans le signal UWB réfléchi ;
filtrer les données sans bruit par suppression d'une composante temporelle basse fréquence des données sans bruit ;
réaliser une soustraction d'arrière-plan sur les données sans bruit filtrées à l'aide d'ondelettes ; et
générer l'image binaire des données sans bruit à l'aide d'une sortie obtenue à partir de la soustraction d'arrière-plan réalisée sur les données sans bruit filtrées.

13. Dispositif électronique selon la revendication 9, dans lequel la ou les instructions, lorsqu'elles sont exécutées par le processeur (130), amènent le dispositif électronique à :
déterminer un coefficient de performance à partir du motif généré ;
déterminer si le coefficient de performance satisfait à une valeur seuil ; et
réaliser au moins l'une parmi :
sur la base de la détermination du fait que le coefficient de performance satisfait à la valeur seuil, la détection de l'anomalie de l'au moins un objet ; et
sur la base de la détermination du fait que le coefficient de performance ne satisfait pas à la valeur seuil, la mise à jour du motif généré dans une base de données.

14. Procédé de gestion d'objets par un dispositif électronique, le procédé comprenant :
la surveillance (301), pendant une période de temps à l'aide d'un capteur à bande ultra-large, UWB, d'une variation d'au moins l'un d'une propriété de matériau et d'un mouvement associés à au moins un objet ;
l'extraction (302) de paramètres de constante diélectrique et de signal de phase polynomiale, PPS, de l'au moins un objet indiquant une ampleur de la variation de la propriété de matériau et du mouvement associés à l'au moins un objet ;
la détermination (303) d'un motif sur la base des paramètres de la constante diélectrique et du PPS ; et
la fourniture (306) à un utilisateur, d'au moins une recommandation de performance de l'au moins un objet correspondant au motif déterminé,
dans lequel l'extraction (302) comprend :
l'identification de l'au moins un objet sur la base d'un signal UWB réfléchi reçu au niveau du capteur UWB provenant de l'au moins un objet et d'informations reçues provenant d'une source de données externe ou d'un utilisateur.

15. Procédé selon la revendication 14, dans lequel la fourniture (307) de l'au moins une recommandation de performance comprend :
la détermination, à l'aide d'un moteur d'intelligence artificielle, IA, d'un état fonctionnel de l'au moins un objet sur la base de la propriété de matériau et du mouvement associés à l'au moins un objet ; et
la génération de l'au moins une recommandation de performance sur la base de l'état fonctionnel de l'au moins un objet.
